# EUROPEAN PATENT SPECIFICATION

(11) **EP 4 395 540 B1**
(45) Date of publication and mention of the grant of the patent: **10.06.2026**
(21) Application number: 22862415.1
(22) Date of filing: 25.08.2022
(51) Int. Cl.: A01K 55/00, A01K 59/00, A01K 47/00, B62B 1/00, B62B 1/04

(54) **BEEHIVE FRAME TRANSPORT CART**
BIENENSTOCKRAHMEN-TRANSPORTWAGEN
CHARIOT DE TRANSPORT DE CADRES DE RUCHE

(30) Priority: 02.09.2021 AU 2021902849
(43) Date of publication of application: 10.07.2024
(73) Proprietor: A.c.n. 652 266 101 Pty Ltd, Claremont, Western Australia 6010 (AU)
(72) Inventor: BRUNNER, Jessica Kate, Claremont, Western Australia 6010 (AU)
(74) Representative: O'Kane, Jessica Ann
(86) International application number: PCT/AU2022/051014
(87) International publication number: WO 2023/028641

(56) References cited:
- AU-A1- 2020 202 354
- CN-A- 107 672 630
- CN-U- 208 836 802
- CN-U- 211 793 743
- CN-U- 211 995 629
- KR-B1- 101 030 323
- KR-U- 20120 007 813
- US-A- 5 758 886

## Description

### TECHNICAL FIELD

This invention relates broadly to the field of apiculture, and more particularly to a beehive frame transport cart that finds particular application in the field of beehive inspection, removal and transport of frames from a beehive.

### BACKGROUND ART

The following discussion of the background art is intended to facilitate an understanding of the present invention only. The discussion is not an acknowledgement or admission that any of the material referred to is or was part of the common general knowledge as at the priority date of the application.

Beekeeping (or apiculture) is the maintenance of bee colonies, commonly in man-made hives. Most such bees are honey bees in the genus *Apis,* but other honey-producing bees such as *Melipona* stingless bees are also kept. A beekeeper (or apiarist) generally keeps bees in order to collect their honey and other products that the hive produces (including beeswax, propolis, flower pollen, bee pollen, and royal jelly), to pollinate crops, or to produce bees for sale to other beekeepers.

A beehive's internal structure is generally a densely packed group of hexagonal prismatic cells made of beeswax, called a honeycomb. The bees use the cells to store food (honey and pollen) and to house the brood (eggs, larvae, and pupae). Although man have practiced beekeeping since ancient times, the 19th century saw a revolution in beekeeping practice due to the development of the movable comb hive by Lorenzo Lorraine Langstroth. Langstroth was the first person to make practical use of an earlier discovery that there was a specific spatial measurement between wax combs in a beehive, later called the "bee space", which bees do not block with wax, but keep as a free passage. Having determined this bee space as usually between 5 and 8 mm, Langstroth then designed a series of wooden frames within a rectangular hive box, carefully maintaining the correct space between successive frames, and found that the bees would build parallel honeycombs in the box without bonding them to each other or to the hive walls.

This discovery and subsequent hive design enabled beekeeping where a frame is slidable or removable from a hive for inspection, without harming the bees or the comb. It also meant that combs containing honey could be gently removed and the honey extracted without destroying the comb. The emptied honey combs could then be returned to the bees intact for refilling. The development of the movable-comb-hive fostered the growth of commercial honey production on a large scale.

In general, a conventional Langstroth hive comprises a bottom board at the bottom of the hive with an entrance to the beehive. On top of the bottom board is a deep hive body, i.e. a wooden box with frames of comb where the queen bee lays eggs. This part of the beehive is also called the 'brood chamber' or 'brood box' - where brood rearing takes place, 'brood' being the term for bee larva. So-called 'supers' are placed on top of the brood chamber. 'Supers' are wooden boxes with frames of comb where the bees store honey. A 'queen excluder' is typically placed between the brood chamber and the supers. The queen excluder is a grate adapted so that worker bees are small enough to crawl through it but the queen is too big. This keeps the queen from laying eggs in the honey supers. The deep hive body and the supers each contain around ten removable frames of comb, separated by a suitable bee space. On top of the hive, an inner cover and an outer cover are used - the inner cover to keep the hive tightly closed and the outer cover to serve as extra protection against the elements.

One shortcoming with conventional beehives is the proper handling and management of frames during inspection and harvest of honey. In order to safely inspect a beehive for hive management purposes, an apiarist must regularly lift an entire full top Super complete with 8 to 10 frames for access to a lower Super and/or the brood box. This can weigh in excess of 25 kilograms which needs to be placed to the side and then replaced following inspection. Alternatively, frames are removed individually and placed on the ground or suspended off hangers which exposes bees to external elements and risks removing, relocating or accidentally killing the queen bee.

Similarly, in order to safely harvest the honey, an apiarist must remove the frames from the vicinity of the bees as they will defend the hive and try to move their honey back to the hive. Once removed, the full frames need to be relocated to a secure location distanced from the bees as they may travel long distances, e.g. 1km or more, if they can scent their honey. The full frames also need to be stored securely, as bees will try to gain access to storage facilities and storage containers if they smell their honey.

Prior art honey extraction apparatus is known, such as AU 2020 202 354 A1 to Mitchell, which teaches apparatus for extracting honey from honeycomb having a container and a holding arrangement within the container for holding honeycomb is a horizontal plane. Similarly, CN 211 793 743 U to the Sichuan Vocational College of Information Technology describes a portable electric honey extractor which holds honeycomb frames inside a can and spins them with an electric motor to extract honey via centrifugal force. However, none of these prior art honey extractors facilitates the removal, transport and storage of honeycomb frames during hive inspection and/or honey collection, being only devised for honey extraction from honeycomb either under the influence of gravity after pressing, or via the artificial application of centrifugal force, potentially damaging the frames. CN 211 995 629 U discloses a beehive transport tool comprising a frame body, wheels and a clamping assembly.

The current invention was conceived with the goal in mind of ameliorating the risks associated with inspecting a beehive, as well as removing, transporting and storing honeycomb frames from a beehive.

### SUMMARY OF THE INVENTION

According to an aspect of the invention there is provided a beehive frame transport cart comprising:
a support frame supporting a wheeled reservoir container which defines a honey reservoir with a tap located at a bottom thereof;
a plurality of open-bottomed frame containers each configured sealingly to stack on the reservoir container and/or each other, each frame container defining an internal upper peripheral ledge for receiving ends of beehive frames to suspend a plurality of said frames in a substantially vertical and side-by-side manner within said frame container;
a plurality of foraminous queen excluder plates each insertable at a bottom of a stacked frame container; and
a lid configured to seal an upper stacked frame container, or to engage with a bottom of a frame container to form a drip tray, as required, wherein a plurality of beehive frames is receivable, transportable and storable within the cart.

The skilled addressee is to appreciate that, in the art of beekeeping, a queen excluder is a selective barrier configured to allow worker bees, but not the larger queens and drones, to traverse the barrier. Accordingly, the foraminous queen excluder plates typically define foramina shaped and dimensioned to function as a queen excluder.

In an embodiment, the wheeled reservoir container defines an internal upper peripheral ledge for receiving ends of beehive frames to suspend a plurality of said frames in a substantially vertical and side-by-side manner within said reservoir container.

In an embodiment, the support frame defines a handle to facilitate ease of pushing or pulling said cart, said handle configured so that a resultant moment of a weight of the container(s) about wheels of the wheeled reservoir is easily offset by a counteracting force operatively applied along a length of the handle.

In an embodiment, the handle comprises a telescoping handle whereby a length and/or height thereof is adjustable.

In an embodiment, the reservoir container defines a sloped floor which is configured to direct honey in said reservoir towards the tap.

In an embodiment, the sloped floor defines a plurality of striations, ridges and/or grooves configured to direct honey in the reservoir towards the tap under the influence of gravity.

In an embodiment, the tap includes a filter configured to sift particulate material from honey.

In an embodiment, the reservoir container and/or the frame container(s) include suitable fasteners to facilitate stacking said containers in a sealing manner.

Typically, the fastener comprises an over-centre latch.

In an embodiment, the reservoir container and/or the frame container(s) include deployable handles to facilitate handling thereof.

In an embodiment, the reservoir and frame containers and the lid comprise similar cross-sectional profiles in order to complementarily engage when stacked to form a unitary cart.

In an embodiment, the lid defines ventilation apertures so that the cart is useable as a portable swarm collector.

In an embodiment, the reservoir container and/or the frame container(s) includes a seal to allow airtight and/or fluid tight sealing between stacked containers and/or the lid.

In an embodiment, the cart includes a tool tray configured to be complementarily stacked with the reservoir and frame containers, said tool tray configured to store beekeeping tools.

In an embodiment, the reservoir and/or frame containers are manufactured from an insulating material in order to regulate an internal temperature of said containers.

In an embodiment, the cart includes a removeable cover which is placeable about the reservoir and/or frame containers in order to regulate an internal temperature of said containers.

In an embodiment, the reservoir and frame containers and the lid are manufactured from food-grade polymers.

In an embodiment, the reservoir and frame containers and/or the lid are manufactured from a transparent or translucent polymer to facilitate visual inspection of an interior of said containers.

Alternatively, the reservoir and frame containers and/or the lid are manufactured from an opaque material to minimise light exposure to honey and/or honeycomb within the container(s).

### BRIEF DESCRIPTION OF THE DRAWINGS

The description will be made with reference to the accompanying drawings in which:

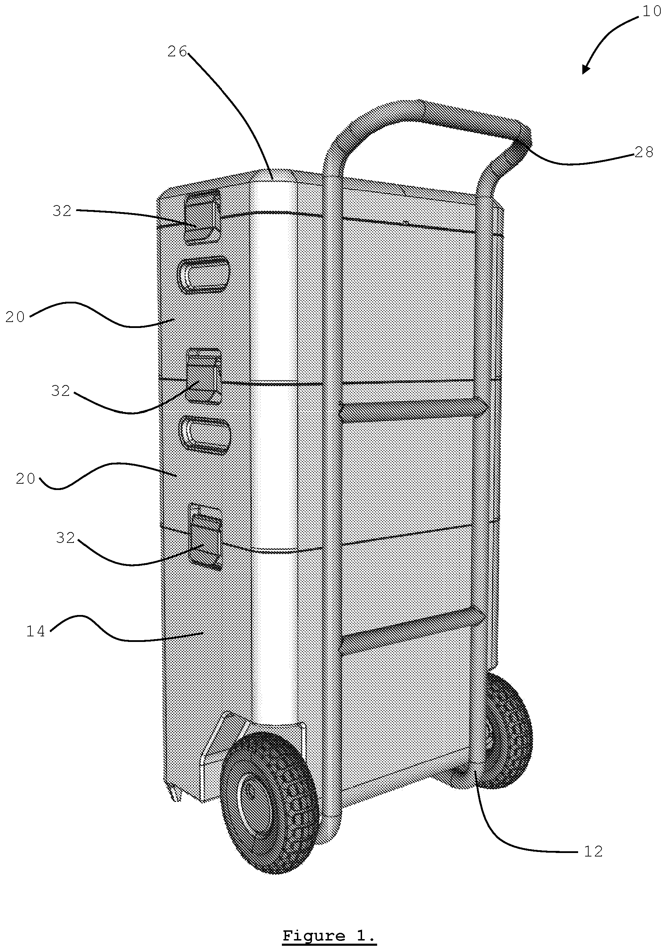

**Figure 1** is a diagrammatic perspective-view representation of one possible embodiment of a beehive frame transport cart, in accordance with aspects of the present invention;

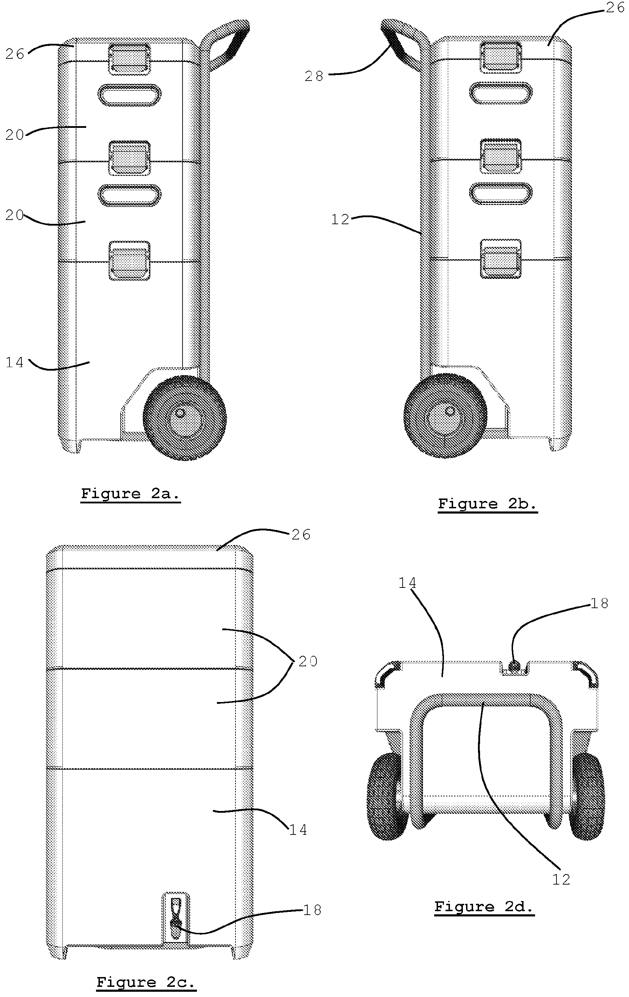

**Figures 2a to 2d** show diagrammatic side, front and bottom view representations of the beehive frame transport cart of Figure 1;

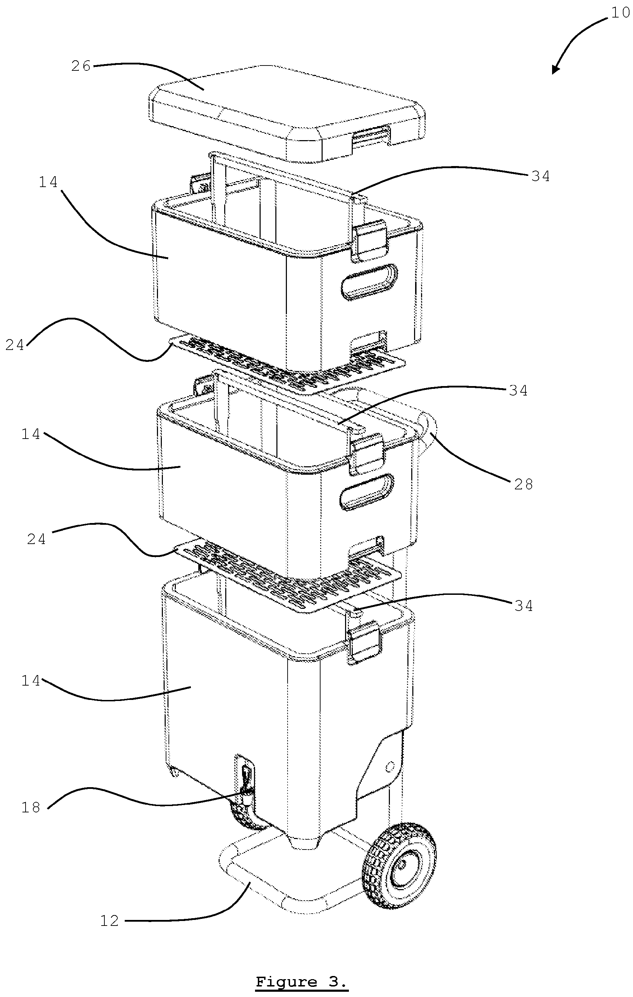

**Figure 3** is diagrammatic exploded perspective-view representation of the beehive frame transport cart of Figure 1;

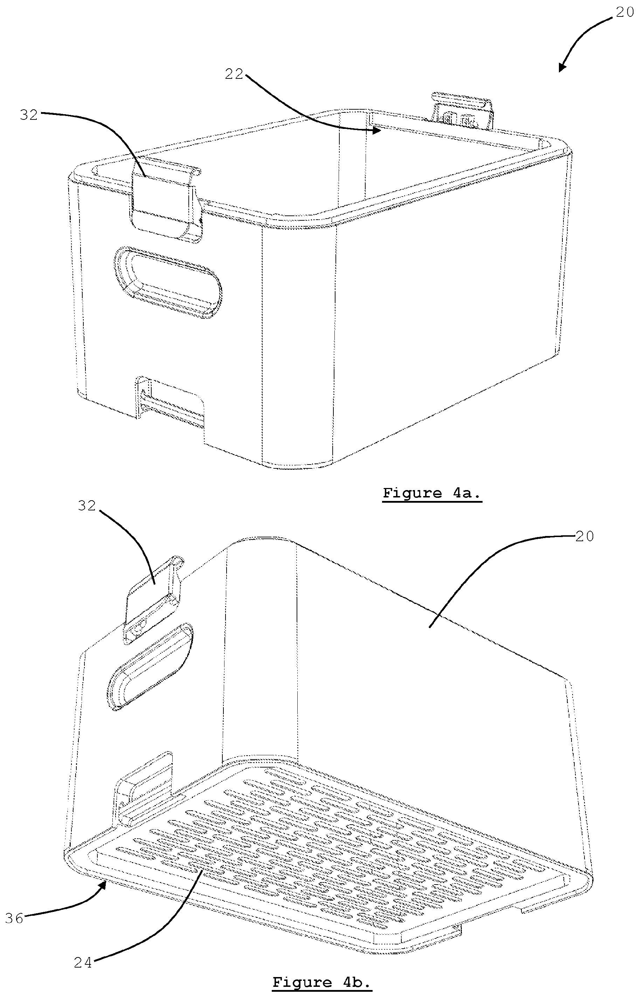

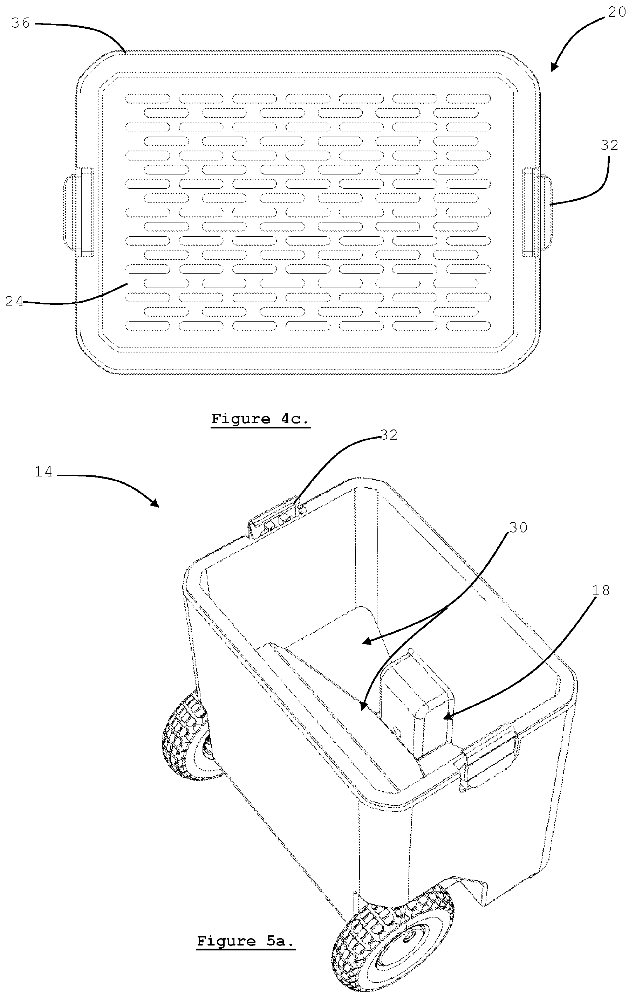

**Figures 4a to 4c** show diagrammatic perspective and bottom view representations of a frame container of the beehive frame transport cart of Figure 1; and

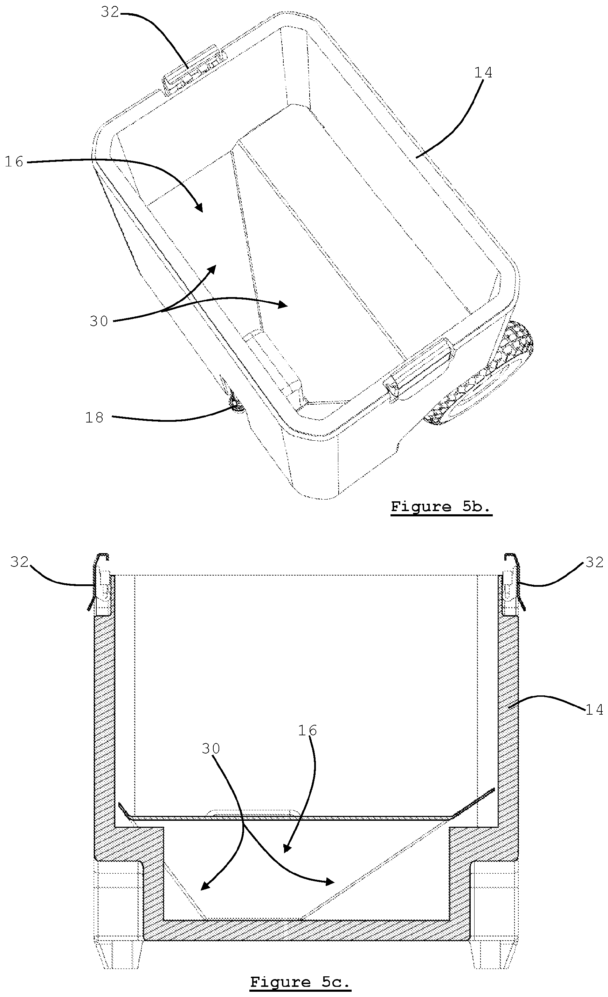

**Figures 5a to 5c** show diagrammatic perspective and side-sectional representations of a reservoir container of the beehive frame transport cart of Figure 1.

### DETAILED DESCRIPTION OF EMBODIMENTS

Further features of the present invention are more fully described in the following description of several nonlimiting embodiments thereof. This description is included solely for the purposes of exemplifying the present invention to the skilled addressee. It should not be understood as a restriction on the broad summary, disclosure or description of the invention as set out above.

In the figures, incorporated to illustrate features of the example embodiment or embodiments, like reference numerals are used to identify like parts throughout. Additionally, features, mechanisms and aspects well-known and understood in the art will not be described in detail, as such features, mechanisms and aspects will be within the understanding of the skilled addressee.

With reference now to the accompanying figures, there is shown one possible embodiment of a beehive frame transport cart 10 in accordance with aspects of the present invention. Such a cart 10 finds particular application in an apiarian or beekeeping environment when inspecting a hive, or harvesting honey from honeycomb on beehive frames. Broadly, the cart 10 comprises a support frame 12 with wheeled reservoir container 14, a plurality of frame containers 20, and a lid 26.

More specifically, the beehive frame transport cart 10 comprises a support frame 12 which supports a wheeled reservoir container 14 which defines a honey reservoir 16 with a tap 18 located at a bottom thereof. Cart 10 also includes a plurality of open-bottomed frame containers 20, each of which is configured sealingly to stack on the reservoir container 14 and/or each other, to form a unitary cart. Each frame container 20 defines an internal upper peripheral ledge 22 for receiving ends of beehive frames to suspend a plurality of said frames in a substantially vertical and side-by-side manner within said frame container 20. Importantly, each frame container 20 is configured to receive and suspend beehive frames therein so that honey is able to drip under the influence of gravity towards the honey reservoir 16.

Cart 10 also includes a plurality of foraminous queen excluder plates 24 which are each insertable at a bottom of a stacked frame container 20, as well as a lid 26 which is configured to seal an upper stacked frame container 20, or to engage with a bottom of a frame container 20 to form a drip tray, as required. In this manner, a plurality of beehive frames is receivable, transportable and storable within the cart 10. Importantly, the queen excluder plates 24 that are stackable as part of the containers 14 and 20 allow the cart to store frames during hive inspection, as well as protecting the queen bee during frame removal and transport.

The skilled addressee is to appreciate that, in the art of beekeeping, a queen excluder is a selective barrier configured to allow worker bees, but not the larger queens and drones, to traverse the barrier. Accordingly, the foraminous queen excluder plates 24 typically define foramina shaped and dimensioned to function as a queen excluder.

In one embodiment, the wheeled reservoir container 14 also defines an internal upper peripheral ledge 26 for receiving ends of beehive frames to suspend a plurality of said frames in a substantially vertical and side-by-side manner within said reservoir container. In such an embodiment, the wheeled reservoir container 14 is generally deeper when compared to the open-bottomed frame containers 20 to allow space for honeycomb frames and the honey reservoir 16.

In one embodiment, the support frame 12 defines a handle 28 in order to facilitate ease of pushing or pulling said cart 10. The handle 28 may be telescoping to allow a length and/or height thereof to be adjustable and is typically configured so that a resultant moment of a weight of the container(s) 14 and 20 about wheels of the wheeled reservoir 14 is easily offset by a counteracting force operatively applied along a length of the handle.

In an embodiment, the reservoir container 14 defines a sloped floor 30 which is configured to direct honey in the reservoir 16 towards the tap 18. The sloped floor 20 may also define a plurality of striations, ridges and/or grooves (not shown) which are configured to direct honey in the reservoir 16 towards the tap 18 under the influence of gravity. In an embodiment, the tap 18 may include a filter configured to sift particulate material from honey. The skilled addressee is to appreciate that the tap 18 may take various forms, such as a stoppable aperture, a faucet-like tap, etc.

In one embodiment, the reservoir container 14 and/or the frame container(s) 20 include suitable fasteners 32 to facilitate stacking said containers in a sealing manner. Typically, these fasteners 32 comprises an over-centre latch or toggle, but variations hereon are possible and expected. In an embodiment, the reservoir container 14 and/or the frame container(s) 20 also include deployable handles 34 in order to facilitate handling thereof.

Preferably, the reservoir and frame containers 14 and 20 and the lid 26 typically comprise similar cross-sectional profiles in order to complementarily engage when stacked to form a unitary cart. In an embodiment, the lid 26 defines ventilation apertures so that the cart 10 is useable as a portable swarm collector. The lid 26 is generally configured to seal either the reservoir or frame containers 14 or 20, as required, and selectively to form a drip tray for a frame container 20, as required. For example, the lid 26 is generally interchangeable between containers 14 and 20 and can also be placed onto a bottom of a frame container 20 in order to function as a drip tray.

In one embodiment, the reservoir container 14 and/or the frame container(s) 20 includes a seal 36 to allow airtight and/or fluid tight sealing between stacked containers and/or the lid. In an embodiment, the cart 10 may also include a tool tray (not shown) which is configured to be complementarily stacked with the reservoir and frame containers 14 and 20, said tool tray configured to store beekeeping tools.

In an embodiment, the reservoir and/or frame containers 14 and 20 are manufactured from an insulating material in order to regulate an internal temperature of said containers. In an embodiment, the cart 10 includes a removeable cover (not shown) which is placeable about the reservoir and/or frame containers 14 and 20 in order to regulate an internal temperature of said containers.

In an embodiment, the reservoir and frame containers 14 and 20 and the lid 26 are generally manufactured from food-grade polymers. In an embodiment, the reservoir and frame containers and/or the lid may also be manufactured from a transparent or translucent polymer to facilitate visual inspection of an interior of said containers, e.g. include at least a part translucent or transparent section to allow inspection of, for example, a level of honey within the honey reservoir 16, or the like. Alternatively, an opaque material may be used which may facilitate in long-term storage of honey, i.e. minimise exposure to outside light, or the like.

In the manner described, by stacking frame containers 20 on top of each other with the reservoir container 14 at the bottom with said containers supported on the frame 12, facilitates storage and transport of beehive frames.

Applicant believes it particularly advantageous that the present invention provides for a cart 10 which can be used for inspection of hives and/or storage purposes of honeycomb frames. The various containers may also be separated for use in alternative configurations to address the alternative stages of the honey harvesting process. Additionally, cart 10 ameliorates a risk of carrying heavy frames and allows for the easy removal and sealing of honeycomb from a hive. In addition, cart 10 allows collection and storage of honey in a sealed environment preventing bee death and robbing.

In the example embodiments, well-known processes, well-known device structures, and well-known technologies are not described in detail, as such will be readily understood by the skilled addressee.

The use of the terms "a", "an", "said", "the", and/or similar referents in the context of describing various embodiments (especially in the context of the claimed subject matter) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. As used herein, the term "and/or" includes any and all combinations of one or more of the associated listed items. No language in the specification should be construed as indicating any non-claimed subject matter as essential to the practice of the claimed subject matter.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

It is to be appreciated that reference to "one example" or "an example" of the invention, or similar exemplary language (e.g., "such as") herein, is not made in an exclusive sense. Accordingly, one example may exemplify certain aspects of the invention, whilst other aspects are exemplified in a different example. These examples are intended to assist the skilled person in performing the invention and are not intended to limit the overall scope of the invention, defined by the claims, in any way unless the context clearly indicates otherwise. Variations (e.g. modifications and/or enhancements) of one or more embodiments described herein might become apparent to those of ordinary skill in the art upon reading this application. The inventor(s) expects skilled artisans to employ such variations as appropriate, and the inventor(s) intends for the claimed subject matter to be practiced other than as specifically described herein.

## Claims

1. A beehive frame transport cart (10) comprising:
a support frame (12) supporting a wheeled reservoir container (14) which defines a honey reservoir (16) with a tap (18) located at a bottom thereof;
a plurality of open-bottomed frame containers (20) each configured sealingly to stack on the reservoir container (14) and/or each other, each frame container defining an internal upper peripheral ledge (22) for receiving ends of beehive frames to suspend a plurality of said frames in a substantially vertical and side-by-side manner within said frame container;
a plurality of foraminous queen excluder plates (24) each insertable at a bottom of a stacked frame container; and
a lid (26) configured to seal an upper stacked frame container, or to engage with a bottom of a frame container to form a drip tray, as required, wherein a plurality of beehive frames is receivable, transportable and storable within the cart.

2. The cart of claim 1, wherein the foraminous queen excluder plates define foramina shaped and dimensioned to function as a queen excluder.

3. The cart of either of claims 1 or 2, wherein the wheeled reservoir container defines an internal upper peripheral ledge for receiving ends of beehive frames to suspend a plurality of said frames in a substantially vertical and side-by-side manner within said reservoir container.

4. The cart of any of claims 1 to 3, wherein the support frame defines a handle to facilitate ease of pushing or pulling said cart, said handle configured so that a resultant moment of a weight of the container(s) about wheels of the wheeled reservoir is easily offset by a counteracting force operatively applied along a length of the handle.

5. The cart of claim 4, wherein the handle comprises a telescoping handle whereby a length and/or height thereof is adjustable.

6. The cart of any of claims 1 to 5, wherein the reservoir container defines a sloped floor which is configured to direct honey in said reservoir towards the tap, and wherein the sloped floor defines a plurality of striations, ridges and/or grooves configured to direct honey in the reservoir towards the tap under the influence of gravity.

7. The cart of any of claims 1 to 6, wherein the tap includes a filter configured to sift particulate material from honey.

8. The cart of any of claims 1 to 7, wherein the reservoir container and/or the frame container(s) include suitable fasteners, such as an over-centre latch or toggle, to facilitate stacking said containers in a sealing manner.

9. The cart of any of claims 1 to 8, wherein the reservoir container and/or the frame container(s) include deployable handles to facilitate handling thereof.

10. The cart of any of claims 1 to 9, wherein the reservoir and frame containers and the lid comprise similar cross-sectional profiles in order to complementarily engage when stacked to form a unitary cart, and wherein the reservoir container and/or the frame container(s) includes a seal to allow airtight and/or fluid tight sealing between stacked containers and/or the lid.

11. The cart of any of claims 1 to 10, wherein the lid defines ventilation apertures so that the cart is useable as a portable swarm collector.

12. The cart of any of claims 1 to 11, which includes a tool tray configured to be complementarily stacked with the reservoir and frame containers, said tool tray configured to store beekeeping tools.

13. The cart of any of claims 1 to 12, wherein the reservoir and/or frame containers are manufactured from an insulating material in order to regulate an internal temperature of said containers.

14. The cart of any of claims 1 to 13, which includes a removeable cover which is placeable about the reservoir and/or frame containers in order to regulate an internal temperature of said containers.

15. The cart of any of claims 1 to 14, wherein the reservoir and frame containers and/or the lid are manufactured from a transparent or translucent polymer to facilitate visual inspection of an interior of said containers, or wherein the reservoir and frame containers and/or the lid are manufactured from an opaque material to minimise light exposure to honey and/or honeycomb within the container(s).

## Patentansprüche

1. Bienenstockrahmen-Transportwagen (10), umfassend:
einen Tragrahmen (12), der einen mit Rädern versehenen Speicherbehälter (14) trägt, der einen Honigspeicher (16) definiert, an dessen Boden sich ein Hahn (18) befindet;
eine Vielzahl von Rahmenbehältern (20) mit offenem Boden, die jeweils konfiguriert sind, um verschließend auf dem Speicherbehälter (14) und/oder aufeinander gestapelt zu werden, wobei jeder Rahmenbehälter eine innere obere Randleiste (22) zum Aufnehmen von Enden von Bienenstockrahmen definiert, um eine Vielzahl der Rahmen auf eine im Wesentlichen vertikale und nebeneinander angeordnete Weise innerhalb des Rahmenbehälters aufzuhängen;
eine Vielzahl von durchlöcherten Königin-Absperrgittern (24), die jeweils an einem Boden eines gestapelten Rahmenbehälters einsetzbar sind; und
einen Deckel (26), der konfiguriert ist, um einen oberen, gestapelten Rahmenbehälter zu verschließen oder bei Bedarf mit einem Boden eines Rahmenbehälters einzugreifen, um eine Tropfschale zu bilden, wobei eine Vielzahl von Bienenstockrahmen in dem Wagen aufnehmbar, transportfähig und lagerungsfähig ist.

2. Wagen nach Anspruch 1, wobei die durchlöcherten Königin-Absperrgitter kleine Öffnungen definieren, die geformt und dimensioniert sind, um als eine Königin-Absperrung zu funktionieren.

3. Wagen nach Anspruch 1 oder 2, wobei der mit Rädern versehene Speicherbehälter eine innere obere Randleiste zum Aufnehmen von Enden von Bienenstockrahmen definiert, um eine Vielzahl der Rahmen auf eine im Wesentlichen vertikale und nebeneinander angeordnete Weise innerhalb des Speicherbehälters aufzuhängen.

4. Wagen nach einem der Ansprüche 1 bis 3, wobei der Tragrahmen einen Griff definiert, um ein leichtes Schieben oder Ziehen des Wagens zu ermöglichen, wobei der Griff konfiguriert ist, sodass ein resultierendes Moment eines Gewichts des/der Behälter um Räder des mit Rädern versehenen Speichers leicht durch eine entgegenwirkende Kraft ausgeglichen wird, die entlang einer Länge des Griffs ausgeübt wird.

5. Wagen nach Anspruch 4, wobei der Griff einen Teleskopgriff umfasst, wodurch eine Länge und/oder Höhe davon einstellbar ist.

6. Wagen nach einem der Ansprüche 1 bis 5, wobei der Speicherbehälter einen geneigten Boden definiert, der konfiguriert ist, um Honig in dem Speicher zu dem Hahn zu leiten, und wobei der geneigte Boden eine Vielzahl von Rillen, Graten und/oder Vertiefungen definiert, die konfiguriert sind, um Honig in dem Speicher unter dem Einfluss von Schwerkraft zu dem Hahn zu leiten.

7. Behälter nach einem der Ansprüche 1 bis 6, wobei der Hahn einen Filter beinhaltet, der konfiguriert ist, um Partikel aus Honig herauszufiltern.

8. Wagen nach einem der Ansprüche 1 bis 7, wobei der Speicherbehälter und/oder der/die Rahmenbehälter geeignete Befestigungselemente, wie einen Schnappverschluss oder einen Knebelverschluss, beinhalten, um ein Stapeln der Behälter auf eine verschließende Weise zu ermöglichen.

9. Wagen nach einem der Ansprüche 1 bis 8, wobei der Speicherbehälter und/oder der/die Rahmenbehälter ausklappbare Griffe beinhalten, um eine Handhabung davon zu ermöglichen.

10. Wagen nach einem der Ansprüche 1 bis 9, wobei der Speicher- und der Rahmenbehälter und der Deckel ähnliche Querschnittsprofile umfassen, um beim Stapeln komplementär einzugreifen, um einen einheitlichen Wagen zu bilden, und wobei der Speicherbehälter und/oder der/die Rahmenbehälter eine Dichtung beinhalten, um einen luft- und/oder fluiddichten Verschluss zwischen gestapelten Behältern und/oder dem Deckel zu ermöglichen.

11. Wagen nach einem der Ansprüche 1 bis 10, wobei der Deckel Belüftungsöffnungen definiert, sodass der Wagen als ein tragbarer Schwarmfänger verwendbar ist.

12. Wagen nach einem der Ansprüche 1 bis 11, der eine Werkzeugschale beinhaltet, die konfiguriert ist, um komplementär zu dem Speicher- und dem Rahmenbehälter gestapelt zu werden, wobei die Werkzeugschale zum Aufbewahren von Imkerwerkzeugen konfiguriert ist.

13. Wagen nach einem der Ansprüche 1 bis 12, wobei der Speicher- und/oder der Rahmenbehälter aus einem isolierenden Material gefertigt sind, um eine Innentemperatur der Behälter zu regulieren.

14. Wagen nach einem der Ansprüche 1 bis 13, der eine abnehmbare Abdeckung beinhaltet, die um den Speicher- und/oder den Rahmenbehälter platzierbar sind, um eine Innentemperatur der Behälter zu regulieren.

15. Wagen nach einem der Ansprüche 1 bis 14, wobei der Speicher- und der Rahmenbehälter und/oder der Deckel aus einem transparenten oder lichtdurchlässigen Polymer gefertigt sind, um eine Sichtkontrolle eines Inneren der Behälter zu ermöglichen, oder wobei der Speicher- und der Rahmenbehälter und/oder der Deckel aus einem lichtundurchlässigen Material gefertigt sind, um eine Lichteinwirkung auf Honig und/oder Waben in dem/den Behälter(n) zu minimieren.

## Revendications

1. Chariot de transport de cadres de ruche (10), comprenant :
un cadre de support (12) supportant un récipient de réservoir à roues (14) qui définit un réservoir de miel (16) avec un robinet (18) situé au niveau d'un fond de celui-ci ;
une pluralité de récipients de cadres à fond ouvert (20), chacun conçu de manière étanche pour s'empiler sur le récipient de réservoir (14) et/ou les uns sur les autres, chaque récipient de cadres définissant un rebord périphérique supérieur interne (22) pour recevoir des extrémités de cadres de ruche afin de suspendre une pluralité desdits cadres de manière sensiblement verticale et côte à côte à l'intérieur dudit récipient de cadres ;
une pluralité de plaques d'exclusion de reine foraminées (24) insérables chacune au niveau d'un fond d'un récipient de cadres empilé ; et
un couvercle (26) conçu pour sceller un récipient de cadres empilé supérieur, ou pour venir en prise avec un fond d'un récipient de cadres pour former un bac compte-gouttes, selon les besoins, dans lequel une pluralité de cadres de ruche peuvent être reçus, transportés et stockés à l'intérieur du chariot.

2. Chariot de la revendication 1, dans lequel les plaques d'exclusion de reine foraminées définissent un foramina formé et dimensionné pour fonctionner en tant qu'exclusion de reine.

3. Chariot de l'une ou l'autre des revendications 1 ou 2, dans lequel le récipient de réservoir à roues définit un rebord périphérique supérieur interne pour recevoir des extrémités de cadres de ruche afin de suspendre une pluralité desdits cadres de manière sensiblement verticale et côte à côte à l'intérieur dudit récipient de réservoir.

4. Chariot de l'une quelconque des revendications 1 à 3, dans lequel le cadre de support définit une poignée pour faciliter la poussée ou la traction dudit chariot, ladite poignée étant conçue afin qu'un élan résultant d'un poids du ou des récipient(s) autour des roues du réservoir à roues est facilement compensé par une force antagoniste appliquée de manière opérationnelle le long d'une longueur de la poignée.

5. Chariot de la revendication 4, dans lequel la poignée comprend une poignée télescopique dont la longueur et/ou la hauteur est réglable.

6. Chariot de l'une quelconque des revendications 1 à 5, dans lequel le récipient de réservoir définit un plancher en pente qui est conçu pour diriger du miel dans ledit réservoir vers le robinet, et dans lequel le plancher en pente définit une pluralité de stries, de crêtes et/ou de rainures conçues pour diriger du miel dans le réservoir vers le robinet sous l'influence de la gravité.

7. Chariot de l'une quelconque des revendications 1 à 6, dans lequel le robinet comprend un filtre conçu pour tamiser de la matière particulaire hors du miel.

8. Chariot de l'une quelconque des revendications 1 à 7, dans lequel le récipient de réservoir et/ou le ou les récipient(s) de cadre comprennent des attaches appropriées, telles qu'un loquet ou une bascule trop centrés, pour faciliter l'empilement desdits récipients de manière étanche.

9. Chariot de l'une quelconque des revendications 1 à 8, dans lequel le récipient de réservoir et/ou le ou les récipient(s) de cadre comprennent des poignées déployables pour faciliter leur manipulation.

10. Chariot de l'une quelconque des revendications 1 à 9, dans lequel les récipients de réservoir et de cadre et le couvercle comprennent des profils de section transversale similaires afin de venir en prise de manière complémentaire lorsqu'ils sont empilés pour former un chariot unitaire, et dans lequel le récipient de réservoir et/ou le ou les récipient(s) de cadre comprennent un joint pour permettre une étanchéité à l'air et/ou à un fluide entre des récipients empilés et/ou le couvercle.

11. Chariot de l'une quelconque des revendications 1 à 10, dans lequel le couvercle définit des ouvertures de ventilation afin que le chariot puisse être utilisé comme collecteur d'essaim portable.

12. Chariot de l'une quelconque des revendications 1 à 11, qui comprend un plateau à outils conçu pour être empilé de manière complémentaire avec le réservoir et les récipients de cadres, ledit plateau à outils étant conçu pour stocker des outils d'apiculture.

13. Chariot de l'une quelconque des revendications 1 à 12, dans lequel les récipients de réservoir et/ou de cadres sont fabriqués à partir d'un matériau isolant en vue de réguler une température interne desdits récipients.

14. Chariot de l'une quelconque des revendications 1 à 13, qui comprend un élément de couverture amovible qui peut être placé autour du réservoir et/ou des récipients de cadres en vue de réguler une température interne desdits récipients.

15. Chariot de l'une quelconque des revendications 1 à 14, dans lequel les récipients de réservoir et de cadres et/ou le couvercle sont fabriqués à partir d'un polymère transparent ou translucide pour faciliter l'inspection visuelle d'un intérieur desdits récipients, ou dans lequel les récipients de réservoir et de cadres et/ou le couvercle sont fabriqués à partir d'un matériau opaque pour minimiser l'exposition à la lumière du miel et/ou du nid d'abeille à l'intérieur du ou des récipient(s).
